# FASCICULE DE BREVET EUROPEEN

(11) **EP 2 348 171 B1**
(45) Date de publication et mention de la délivrance du brevet: **30.05.2012**
(21) Numéro de dépôt: 10015654.6
(22) Date de dépôt: 10.12.2010
(51) Int. Cl.: E05B 17/20, E05B 17/00, E05C 19/14, B64D 29/06

(54) **Dispositif de verrouillage d'un élément structural contre une structure adjacente, aéronef muni dudit dispositif et procédé d'extraction mis en oeuvre par ledit dispositif**
Blockiervorrichtung eines Strukturelements gegen eine benachbarte Struktur, mit dieser Vorrichtung ausgestattetes Luftfahrzeug und mit dieser Vorrichtung umgesetztes Extraktionsverfahren
Device for locking a structural element against an adjacent structure, aircraft equipped with said device and extraction method implemented by said device

(30) Priorité: 21.01.2010 FR 1000223
(43) Date de publication de la demande: 27.07.2011
(73) Titulaire: EUROCOPTER, 13725 Marignane Cédex (FR)
(72) Inventeur: Rowbut, Alexander, 13090 Aix en Provence (FR); Cristiano, Cédric, 13480 Calas (FR); Koetzel, Xavier, 13270 Fos sur Mer (FR)
(74) Mandataire: Pouillot, Laurent Pierre Paul

(56) Documents cités:
- FR-A1- 2 458 656
- FR-A1- 2 857 400
- US-A- 4 768 815

## Description

La présente invention concerne un dispositif de verrouillage d'un élément structural contre une structure adjacente, un aéronef muni dudit dispositif et un procédé d'extraction mis en oeuvre par ledit dispositif.

L'invention se situe dans le domaine technique des moyens de verrouillage et d'extraction d'un élément structural, et plus particulièrement mais non exclusivement des capots coulissants d'aéronef de type giravion.

Classiquement, un giravion et notamment un hélicoptère comporte un fuselage muni de capots fixés à une structure adjacente par un dispositif de verrouillage, chaque capot étant apte à être déplacé pour laisser libre accès à un opérateur vers les organes internes du giravion. Pour être ouverts, les capots peuvent effectuer un mouvement rotatif autour d'un axe de fixation, ou encore un mouvement de translation. Par exemple, un opérateur peut avoir accès au compartiment moteur en faisant coulisser un capot.

Les documents FR 1591218, FR 2475104, et FR 2458656 présentent des dispositifs de verrouillage.

Le document FR 2458656 notamment divulgue qu'un dispositif de verrouillage comporte un verrou agencé sur le capot à fixer contre une structure adjacente.

Ce verrou est muni d'une poignée articulée autour d'une broche de fixation. Un bras de verrouillage comportant une extrémité libre en forme de crochet arrondi est relié à la poignée par un pion de pivotement. Lorsque la poignée et le bras de verrouillage sont dans une position fermée à savoir une position encastrée, cette poignée et ce bras de verrouillage sont reliés par un loquet de libération basculant, le loquet de libération étant agencé sur la poignée et coopérant avec une cheville d'accrochage du bras de verrouillage.

Le dispositif de verrouillage comprend de plus une broche de retenue disposée sur la structure adjacente à laquelle le capot doit être fixé.

En position fermée, le crochet du bras de verrouillage coopère avec une unique branche transversale de la broche de retenue.

Lorsqu'un opérateur veut ouvrir le capot, cet opérateur fait basculer le loquet de libération, la poignée est ainsi désolidarisée du bras de verrouillage. L'opérateur bascule alors la poignée en lui faisant effectuer une rotation autour de la broche de fixation. Il en résulte un mouvement rotatif du crochet du bras de verrouillage qui sort directement de la broche de retenue. Le dispositif de verrouillage étant alors en position ouverte, l'opérateur peut manoeuvrer le capot.

A titre de variante, la broche de fixation est agencée à l'intérieur d'un trou oblong de la poignée, et une unique biellette de compression relie cette broche de fixation au pion de pivotement.

Ainsi, si le loquet de libération s'ouvre accidentellement en vol, la poignée effectue une rotation minime n'engendrant pas une désolidarisation du crochet et de l'unique branche transversale de retenue.

En effet, la présence du trou oblong et de la biellette de compression induit un désalignement du pion de pivotement, de la broche de fixation et du point de contact entre le crochet et l'unique broche transversale de retenue. Il en résulte un arc-boutement empêchant une ouverture complète du dispositif de verrouillage.

On se référera à la littérature pour obtenir des informations complémentaires concernant cette sécurité.

Ces dispositifs de verrouillage sont efficaces et utilisés couramment dans le domaine aéronautique depuis longtemps.

Cependant, les capots coulissants présentent souvent de grandes dimensions et doivent être suffisamment bien fixés pour ne pas s'ouvrir sous l'effet des forces aérodynamiques qu'ils subissent en vol. Dès lors, pour être maintenus en position fermée en vol, les capots coulissants comportent non seulement des verrous mais aussi des doigts de maintien dénommés aussi « doigts de centrage », agencés sur le pourtour du capot coulissant.

A titre de variante, les doigts de centrage peuvent être solidarisés à des structures adjacentes à laquelle le capot doit être fixé en vol, ce capot possédant alors des moyens de réception desdits doigts de centrage.

Or, les tolérances de fabrication engendrent souvent des frictions importantes entre chaque doigt de centrage et le moyen de réception correspondant.

Dès lors, lorsque les dispositifs de verrouillage sont ouverts, l'opérateur éprouve de grandes difficultés pour faire coulisser le capot. Des moyens de préhension ont alors été disposés sur les capots afin que l'opérateur puisse s'en saisir pour procéder à l'ouverture du capot. Malgré ces moyens de préhension, le coulissement peut être difficile à obtenir le long des doigts de centrage.

On note que l'homme du métier des chambres froides est confronté à un problème d'ouverture de porte, la porte d'une chambre froide tendant à rester collée au chambranle de la porte.

Pour y remédier, on connaît une poignée reliée à la porte par une liaison articulée et coopérant via une première extrémité par interférence de forme avec une section du chambranle de la porte. En outre, cette poignée est prolongée par un poussoir.

Lorsque l'opérateur manoeuvre la poignée, la poignée tourne autour de la zone de liaison à ladite section du chambranle jusqu'à ce que le poussoir entre en contact avec le mur soutenant le chambranle. On obtient un bras de levier important permettant à l'opérateur de décoller la porte.

La première extrémité est alors dégagée du chambranle et l'opérateur ouvre sans problème la porte.

Toutefois, bien qu'intéressante, on comprend que le domaine technique des portes de chambres froides est éloigné de l'invention et ne saurait être adapté aisément aux capots, et notamment aux capots coulissants. Ce constat est d'autant plus vrai pour un capot d'aéronef nécessitant l'implémentation de verrou encastré ne dépassant pas du capot pour des raisons aérodynamiques évidentes.

La présente invention a alors pour objet de proposer un dispositif de verrouillage permettant de résoudre ce problème d'extraction, le dispositif de verrouillage remplissant de plus la fonction d'extraction des doigts de centrage.

Selon l'invention, un dispositif de verrouillage d'un élément structural tel qu'un capot à une structure adjacente est pourvu d'un verrou apte à être agencé sur l'élément structural et d'une broche de retenue apte à être agencée sur la structure adjacente, ledit verrou comportant d'une part une poignée munie d'un orifice oblong dans lequel est inséré un manchon de fixation à l'élément structural et d'autre part un bras de verrouillage dont une première extrémité est articulée à la poignée par un pion de pivotement, la poignée comportant un loquet de libération apte à empêcher un basculement de la poignée par rapport au bras de verrouillage. L'élément structural peut être un élément structural coulissant, tel qu'un capot coulissant.

Ce dispositif est remarquable en ce que, la broche de retenue comportant une première branche transversale et une deuxième branche transversale séparées par un espacement, une deuxième extrémité du bras de verrouillage comprend un doigt de contact muni de part et d'autre d'une première surface en regard de la première extrémité et d'une deuxième surface opposée à la première surface de manière à regarder dans des sens opposés, la première surface étant un moyen de fermeture qui coopère avec la première branche transversale dans une position fermée du verrou pour verrouiller le dispositif de verrouillage, la deuxième surface étant un moyen d'extraction dudit verrou qui coopère avec ladite deuxième branche transversale dans une position d'extraction du verrou pour écarter longitudinalement le verrou de la broche de retenue, le doigt de contact étant hors de l'espacement dans une position ouverte du verrou pour déverrouiller le dispositif de verrouillage.

Ainsi, contrairement à l'état de la technique, le verrou est pourvu d'un moyen de fermeture et d'un moyen d'extraction.

Par exemple, une première surface du crochet du document FR 2458656 coopère avec une unique branche transversale pour verrouiller le dispositif. Par contre, la broche de retenue ne possède pas une deuxième branche transversale qui coopère avec une deuxième surface du crochet pour extraire le verrou.

L'invention remplit une telle fonction en permettant une cinématique innovante du bras de verrouillage. L'extraction en résultant permet de dégager un capot des doigts de centrage pour faciliter le travail d'un opérateur désirant faire coulisser le capot.

Pour verrouiller le dispositif, on manoeuvre la poignée pour diriger le doigt de contact dans l'espacement et plaquer la première surface contre la première branche transversale. Dans un premier temps, la première surface tend à exercer un effort sur la première branche transversale pour rapprocher le verrou de la broche de retenue, puis cette première surface verrouille le dispositif de verrouillage dans une position fermée.

Le dispositif de verrouillage peut de plus comporter une ou plusieurs des caractéristiques suivantes.

Ainsi, la deuxième surface comporte optionnellement une portion plane apte à être en contact avec la deuxième branche transversale.

Le doigt de contact est par exemple un barreau, les première et deuxième surfaces étant sensiblement parallèles l'une à l'autre La première surface peut néanmoins être arrondie pour optimiser sa coopération avec la première branche transversale.

Par ailleurs, le dispositif peut comporter un plan incliné apte à guider le doigt de contact vers l'espacement lors du verrouillage du dispositif. Ainsi, le verrouillage du dispositif est facilité.

En outre, le bras de verrouillage comporte une gorge coopérant avec le manchon de fixation pour limiter l'encombrement du verrou lorsque le dispositif est verrouillé.

Selon un autre aspect, le verrou comporte une biellette de compression reliant le manchon au pion de pivotement.

Enfin, le bras de verrouillage comportant une cheville d'accrochage entre une première extrémité et une deuxième extrémité de ce bras de verrouillage, le loquet de libération coopère avec la cheville d'accrochage du bras de verrouillage pour empêcher un basculement de la poignée lorsque le dispositif est verrouillé.

Par ailleurs, un mode de réalisation preferé de l'invention vise de plus un aéronef muni d'un élément structural à fixer à une structure adjacente à l'aide d'au moins un dispositif de verrouillage selon l'invention. L'élément structural peut être un élément structural coulissant, tel qu'un capot coulissant. Le dispositif de verrouillage est pourvu d'un verrou agencé sur ledit élément structural et d'une broche de retenue agencée sur ladite structure adjacente, ledit verrou comportant d'une part une poignée munie d'un orifice oblong dans lequel est inséré un manchon de fixation à l'élément structural et d'autre part un bras de verrouillage dont une première extrémité est articulée à la poignée par un pion de pivotement, la poignée comportant un loquet de libération apte à empêcher un basculement de la poignée par rapport au bras de verrouillage. Cet aéronef est alors remarquable en ce que le dispositif de verrouillage est un dispositif selon l'invention tel que décrit précédemment.

Outre un dispositif de verrouillage et un aéronef muni d'un tel dispositif, l'invention vise un procédé de déverrouillage mettant en oeuvre le dispositif de verrouillage.

Ainsi, selon l'invention un procédé de déverrouillage d'un élément structural fixé à une structure adjacente par au moins un dispositif de verrouillage pourvu d'un verrou agencé sur l'élément structural et d'une broche de retenue agencée sur la structure adjacente, le verrou comportant d'une part une poignée munie d'un orifice oblong dans lequel est inséré un manchon de fixation fixé à l'élément structural et d'autre part un bras de verrouillage dont une première extrémité est articulée à la poignée par un pion de pivotement, la poignée comportant un loquet de libération apte à empêcher un basculement de la poignée par rapport au bras de verrouillage, la broche de retenue comportant une première branche transversale et une deuxième branche transversale séparées par un espacement, une deuxième extrémité du bras de verrouillage comprenant un doigt de contact muni de part et d'autre d'une première surface en regard de la première extrémité et d'une deuxième surface opposée à la première surface, la première surface étant un moyen de fermeture qui coopère avec la première branche transversale pour verrouiller ledit dispositif de verrouillage, est notamment remarquable en ce qu'au cours de ce procédé :
- on manoeuvre le loquet de libération pour désolidariser la poignée dudit bras de verrouillage,
- on manoeuvre la poignée sur un premier secteur angulaire pour plaquer la deuxième surface contre la deuxième branche transversale,
- on manoeuvre la poignée sur un deuxième secteur angulaire pour que la deuxième surface exerce un effort sur la deuxième branche transversale afin d'écarter l'élément structural de la structure adjacente, et
- on manoeuvre la poignée sur un troisième secteur angulaire pour sortir le doigt de contact de l'espacement.

Il est à noter que l'élément structural peut être un élément structural coulissant, tel qu'un capot coulissant

L'invention et ses avantages apparaîtront avec plus de détails dans le cadre de la description qui suit avec un exemple de réalisation donné à titre illustratif en référence aux figures annexées qui représentent :
- la figure 1, une vue schématique d'un aéronef muni d'un dispositif de verrouillage selon l'invention,
- la figure 2, une vue de dessus de la broche de retenue du dispositif de verrouillage, et
- les figures 3 à 8, des figures explicitant le procédé de déverrouillage mis en oeuvre par le dispositif de verrouillage.

Les éléments présents dans plusieurs figures distinctes sont affectés d'une seule et même référence.

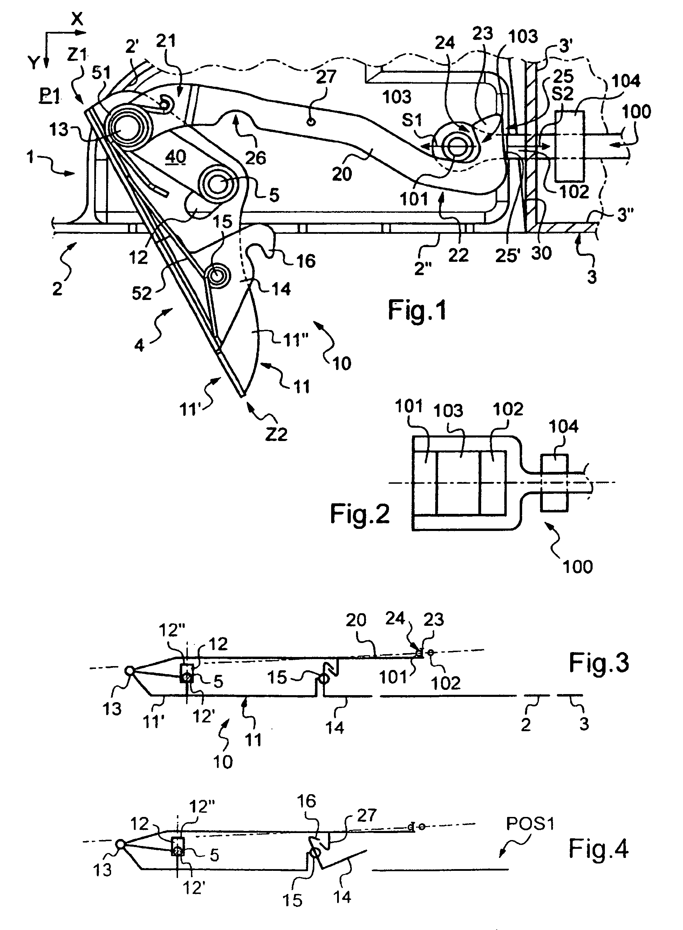

La figure 1 présente une vue schématique d'un aéronef 1, et plus particulièrement un élément structural 2 accolé à une structure adjacente 3.

L'élément structural 2 est par exemple un capot 2" perpendiculaire à un premier plan P1 de la feuille contenant la figure 1 servant à cloisonner un compartiment d'un giravion, tel qu'un compartiment moteur. De même, la structure adjacente comprend un panneau fixe 3" perpendiculaire audit premier plan P1 de la feuille. Pour obturer le compartiment, l'élément structural 2 est alors plaqué contre la structure adjacente 3.

Le capot 2 est coulissant selon un axe longitudinal X afin d'être accolé à la structure adjacente 3.

Afin d'être maintenu en position, l'aéronef comporte un dispositif de verrouillage 4 apte à verrouiller l'élément structural 2 en position contre la structure adjacente 3.

Ce dispositif de verrouillage 4 est pourvu d'une part d'un verrou 10 fixé sur une plaque de fixation 2' de l'élément structural 2. Par exemple cette plaque de fixation 2' est perpendiculaire au capot 2" et donc contenue dans ledit premier plan P1. D'autre part le dispositif de verrouillage 4 est pourvu d'une broche de retenue 100 fixée à un organe de fixation 3' de la structure adjacente 3, par exemple perpendiculaire au panneau fixe 3".

En référence à la figure 2, la broche de retenue 100 comporte une première branche transversale 101 et une deuxième branche transversale 102 séparées par un espacement 103 vide. De plus, la broche de retenue comporte un moyen de fixation 104 réglable à un pan 3' de la structure adjacente, perpendiculaire au panneau 3. On se référera par exemple au document FR 2458656 pour obtenir une réalisation d'un tel moyen de fixation.

En référence à la figure 1, le verrou 10 comporte une poignée 11 pourvue d'un premier élément plan 11' apte à affleurer l'élément structural 2 et plus particulièrement le capot 2" ainsi que d'un deuxième élément plan 11" perpendiculaire au premier élément plan 11'.

Dès lors, la poignée 11 du verrou 10 est munie d'un orifice oblong 12 dans lequel se trouve un manchon de fixation 5 à au moins un organe support 2' de l'élément structural, perpendiculaire au capot 2" et parallèle au deuxième élément plan 11". Eventuellement, le verrou 10 peut être enserré entre deux organes supports 2', le manchon de fixation 5 étant fixé perpendiculairement à ces deux organes supports 2'. La poignée 11 peut alors effectuer une rotation autour du manchon de fixation 5.

Le verrou 10 comprend de plus un bras de verrouillage 20 courbé s'étendant selon la direction longitudinale X d'une première extrémité 21 vers une deuxième extrémité 22. La première extrémité 21 est alors articulée à une première zone extrémale Z1 de la poignée 11 par un pion de pivotement 13. Un premier organe élastique 51 de type ressort tend à écarter la poignée 11 du bras de verrouillage 20, plus particulièrement la deuxième extrémité 22 du bras de verrouillage 20 d'une deuxième zone extrémale Z2 de la poignée 11.

Par ailleurs, la poignée 11 est équipée d'un loquet de libération 14 agencé entre la première zone extrémale Z1 et la deuxième zone extrémale Z2 de la poignée 11, pour empêcher la deuxième zone extrémale Z2 de s'écarter de la deuxième extrémité 22 sous l'effet de l'organe élastique 51 ou encore de forces aérodynamiques.

Ce loquet de libération 14 est muni d'un crochet de libération 16 qui coopère avec une cheville d'accrochage 27 du bras de verrouillage 20, cette cheville d'accrochage 27 s'étendant selon une direction parallèle au manchon de fixation 5 entre la première extrémité 21 et la deuxième extrémité 22 du bras de verrouillage. De plus, le loquet de libération 14 est fixé au deuxième élément plan 11" de la poignée par un axe de rotation 15, parallèle au manchon de fixation 5 et à la cheville d'accrochage 27.

Enfin, un deuxième organe élastique 52 de type ressort est agencé autour de l'axe de rotation 15 pour que le loquet de libération 15 ne saille pas du premier élément plan 11' de la poignée 11.

Lorsque le verrou 10 est fermé, le crochet de libération 16 est en prise avec la cheville d'accrochage 27 pour empêcher un basculement de la poignée 11 par rapport au bras de verrouillage.

A l'inverse, lorsqu'un opérateur appuie sur le loquet de libération 14, ce loquet de libération 14 effectue une rotation autour de l'axe de rotation 15. Le crochet de libération 16 n'est plus en prise avec la cheville d'accrochage 27 ce qui provoque un mouvement relatif entre la poignée 11 et le bras de verrouillage 20.

On note que le bras de verrouillage 20 présente une gorge 26 entre la première extrémité 21 et la deuxième extrémité 22 pour éviter une interférence avec le manchon de fixation 5 quand le crochet de libération 16 est en prise avec la cheville d'accrochage 27. Ainsi, la gorge 26 conformée au manchon de fixation 5 permet d'optimiser la compacité du verrou 10.

En outre, la deuxième extrémité 22 du bras de verrouillage 20 possède un doigt de contact 23 s'étendant selon une direction transversale Y sensiblement perpendiculaire à la direction longitudinale X, selon laquelle direction longitudinale X s'étend le bras de verrouillage de sa première extrémité 21 vers sa deuxième extrémité 22.

Le doigt de contact 23 comprend une première surface 24 en regard du bras de verrouillage 20, et plus particulièrement de la première extrémité 21 de ce bras de verrouillage. Ainsi, la première surface 24 est dirigée selon un premier sens S1 selon lequel s'étend le capot 2" de l'élément structural 2.

De plus, le doigt de contact comprend une deuxième surface 25 en regard du pan 3' de la structure adjacente. Ainsi, la deuxième surface 25 est dirigée selon un deuxième sens S2 selon lequel s'étend le panneau fixe 3" de la structure adjacente 3.

Par suite, la première surface 24 est opposée à la deuxième surface 25, cette première surface 24 et cette deuxième surface 25 étant situées de part et d'autre du doigt de contact 23. Dès lors, la première surface 24 et la deuxième surface 25 sont des flancs opposés du doigt de contact 23.

Quand le doigt de contact 23 est agencé dans l'espacement 103 de la broche de retenue 100, la première surface 24 est donc en regard de la première branche transversale 101 de manière à pouvoir représenter un moyen de fermeture qui coopère avec cette première branche transversale 101, alors qu'au contraire la deuxième surface 25 est en regard de la deuxième branche transversale 102 de manière à pouvoir représenter un moyen de d'extraction qui coopère avec cette deuxième branche transversale 102.

Pour optimiser la coopération du doigt de contact 23 avec la première branche transversale 101 le moment venu, la première surface 24 est éventuellement au moins partiellement concave pour être au moins partiellement conformée à la première branche transversale 101.

De même, pour optimiser la coopération du doigt de contact 23 avec la deuxième branche transversale 102 le moment venu, la deuxième surface 25 comporte une portion plane 25'.

A titre de variante, la deuxième surface 25 est éventuellement au moins partiellement concave pour être au moins partiellement conformée à la deuxième branche transversale 102.

Selon un autre aspect, le dispositif de verrouillage 4 est pourvu d'un plan incliné 30 apte à guider le doigt de contact 23 vers l'espacement 103 lors du verrouillage du dispositif de verrouillage 4.

Par ailleurs, on remarque que le verrou 10 présenté est pourvu d'une unique biellette de compression 40 reliant le manchon de fixation 5 au pion de pivotement 13.

Ainsi, quand le crochet de libération 16 est en prise avec la cheville d'accrochage 27, la ligne de charge du verrou passe par le pion de pivotement, le point de contact entre le doigt de contact et la première branche transversale de la broche de retenue, mais pas par le manchon de fixation 5. A l'inverse, on verra par la suite que suite à la libération de la poignée 11 à l'aide du loquet de libération 14, le verrou se trouve dans une position intermédiaire pour laquelle la ligne de charge du verrou passe par le pion de pivotement, le manchon de fixation 5 et le point de contact. Cette position empêche une ouverture totale du verrou sans intervention humaine. Par conséquent, une ouverture indue du loquet de libération 14 en vol ne risque pas de conduire à une ouverture complète du verrou.

Les figures 3 à 8 explicitent conjointement le procédé de déverrouillage mis en oeuvre par le dispositif de verrouillage 4 selon l'invention.

En référence à la figure 3, lorsque le capot est fermé à savoir lorsque l'élément structural 2 est plaqué contre la structure adjacente 3, la poignée 11 du verrou 10 est solidarisée au bras de verrouillage 20 par le loquet de libération. La poignée 11 est dans une position dite position fermée.

La première surface 24 du doigt 23 coopère avec la première branche transversale 101 de la broche de retenue pour empêcher une translation de l'élément structural 2 par rapport à la structure adjacente 3. De par sa faculté à maintenir l'élément structural 2 contre la structure adjacente 3, la première surface 24 constitue donc un moyen de fermeture.

Pour translater cet élément structural, durant une première étape représentée sur la figure 4, un opérateur manoeuvre sur le loquet de libération 14, ce loquet effectuant une rotation autour de l'axe de rotation 15. Le crochet 16 ne coopère plus avec le pion d'accrochage 27 de manière à désolidariser la poignée 11 du bras de verrouillage 20.

On note que le manchon de fixation 5 se trouve dans un premier fond 12' du trou oblong 12 ménagé dans la poignée 11, ce trou oblong 12 s'étendant d'un premier fond 12' situé à proximité d'un premier élément plan 11' de la poignée 11 vers un deuxième fond 12" situé de fait de manière distale par rapport à ce premier élément plan 11'.

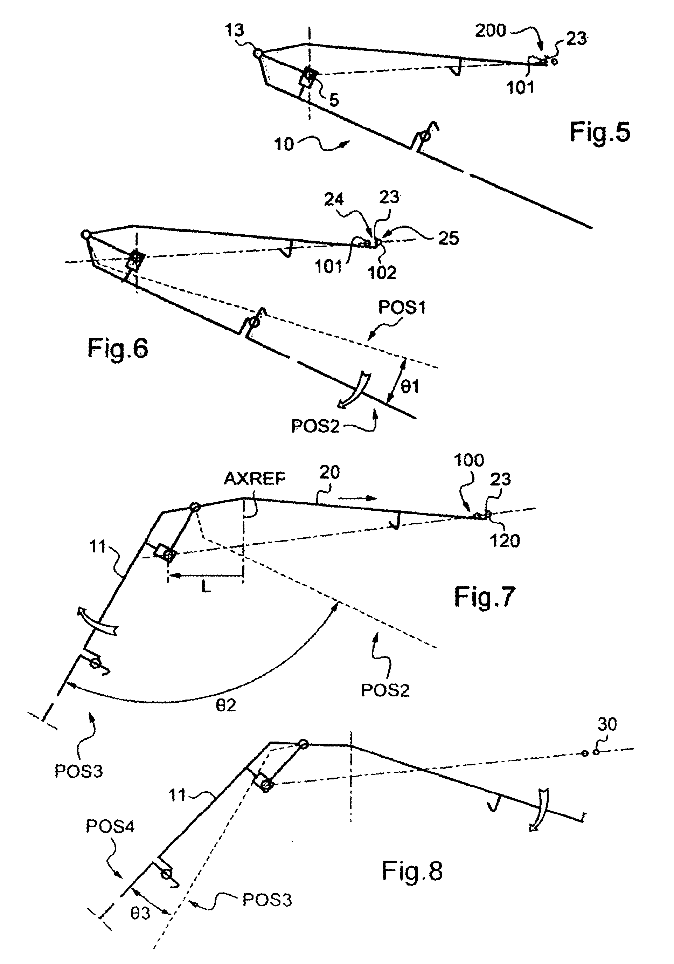

En référence à la figure 5, la libération de la poignée 11 entraîne une rotation de cette poignée 11 autour du manchon de fixation 11. Le manchon de fixation 5 bouge et vient en contact avec le deuxième fond 12" de l'orifice oblong 12. La ligne de charge du verrou 10 passe par le pion de pivotement, le manchon de fixation 5 et le point de contact 200 entre le doigt de contact 23 et la première branche transversale 101.

Le mouvement rotatif de la poignée 11 est alors interrompu, sauf intervention humaine.

Durant une deuxième étape, un opérateur manoeuvre donc la poignée 11 pour lui faire décrire un premier secteur angulaire θ1 par rapport à la première position POS1 fermée du verrou 10 représentée en pointillés. On rappelle que cette première position POS1 est atteinte lorsque le dispositif de verrouillage 4 est verrouillé tel que schématisée sur la figure 1.

A l'issue du parcours de ce premier secteur angulaire θ1, la première surface 25 n'est plus en contact avec la première branche transversale 101. Par contre, la deuxième surface 25 du doigt 23 est en contact avec la deuxième branche transversale 102. La poignée est dans une deuxième position POS2 et le centre du manchon de fixation 5 est alors situé dans un plan de référence AXREF.

Pour extraire l'élément structural 2, en référence à la figure 7 et à partir de la deuxième position POS2 de la figure 6 représentée en pointillés, durant une troisième étape l'opérateur continue de manoeuvrer la poignée 11 sur un deuxième secteur angulaire θ2. La rotation de la poignée 11 entraîne un déplacement longitudinal du bras de verrouillage 20.

Par suite, la deuxième surface 25 du doigt 23 pousse sur la deuxième branche transversale 102.

La structure adjacente 3 solidaire de la broche de retenue 100 étant fixée, le verrou 10 s'éloigne de la broche de retenue 100. Le manchon de fixation 5 s'éloigne donc du plan de référence AXREF d'une distance L, par exemple égale à la longueur des doigts de centrage de l'élément structural 2.

A l'issue de ce deuxième secteur angulaire, la poignée 11 se trouve dans une troisième position POS3. De par sa faculté à écarter l'élément structural 2 de la structure adjacente 3, la deuxième surface 25 constitue donc un moyen d'extraction. On nomme par commodité « position d'extraction » la position de la poignée allant de la deuxième position POS2 à la troisième position POS3 pour laquelle position la deuxième surface est en contact avec la deuxième branche transversale.

Enfin, en référence à la figure 8, durant une quatrième étape, l'opérateur manoeuvre la poignée 11 afin de requérir une rotation de cette poignée sur un troisième secteur angulaire θ3 par rapport à la troisième position POS3 représentée en pointillés.

Durant cette dernière manoeuvre, la cinématique du verrou 10 requiert un mouvement de dégagement du bras de verrouillage tendant à extraire le doigt 23 de l'espacement 103.

En effet, A compter de la troisième position POS3, le bras de verrouillage est en appui contre le premier élément plan 11' de la poignée 11. Par suite, une rotation de la poignée 11 génère une rotation conjointe du bras de verrouillage 20 ce qui permet de dégager le doit de contact 23 de l'espacement 103.

Le dispositif de verrouillage 4 est alors déverrouillé, la poignée étant dans une position dite position ouverte.

On note que pour verrouiller le dispositif de verrouillage 4, on réalise les étapes précédentes en partant de la quatrième étape vers la première étape.

Cependant, pour favoriser l'introduction du doigt 23 dans l'espacement 103, le dispositif de verrouillage comporte éventuellement un plan incliné pour guider le déplacement du doigt 23.

Naturellement, la présente invention définie par les revendications annexées est sujette à de nombreuses variations quant à sa mise en oeuvre. Bien qu'un mode de réalisation ait été décrit, on comprend bien qu'il n'est pas concevable d'identifier de manière exhaustive tous les modes de réalisation possibles. Il est bien sûr envisageable de remplacer un moyen décrit par un moyen équivalent sans sortir du cadre de la présente invention telle que définie par les revendications annexées.

Par exemple, le capot 2 présenté est coulissant selon un axe longitudinal X afin d'être accolé à la structure adjacente 3. Toutefois, ce capot 2 pourrait avoir une autre cinématique, et effectuer par exemple une rotation autour d'axes de fixation sans sortir du cadre de l'invention telle que définie par les revendications annexées.

## Revendications

1. Dispositif de verrouillage (4) d'un élément structural (2) à une structure adjacente (3) pourvu d'un verrou (10) apte à être agencé sur ledit élément structural (2) et d'une broche de retenue (100) apte à être agencée sur ladite structure adjacente (3), ledit verrou (10) comportant d'une part une poignée (11) munie d'un orifice oblong (12) dans lequel est inséré un manchon de fixation (5) audit élément structural (2) et d'autre part un bras de verrouillage (20) dont une première extrémité (21) est articulée à ladite poignée (11) par un pion de pivotement (13), ladite poignée (11) comportant un loquet de libération (14) apte à empêcher un basculement de ladite poignée (11) par rapport audit bras de verrouillage (20),
**caractérisé en ce que**, ladite broche de retenue (100) comportant une première branche transversale (101) et une deuxième branche transversale (102) séparées par un espacement (103), une deuxième extrémité (22) dudit bras de verrouillage (20) comprend un doigt de contact (23) muni de part et d'autre d'une première surface (24) en regard de ladite première extrémité (21) et d'une deuxième surface (25) opposée à ladite première surface (24), ladite première surface (24) étant un moyen de fermeture qui coopère avec ladite première branche transversale (101) pour verrouiller ledit dispositif de verrouillage (4), ladite deuxième surface (25) étant un moyen d'extraction dudit verrou (10) qui coopère avec ladite deuxième branche transversale (102) pour écarter longitudinalement le verrou (10) de la broche de retenue (100), ledit doigt de contact (23) étant hors dudit espacement (103) pour déverrouiller ledit dispositif de verrouillage (4).

2. Dispositif selon la revendication 1,
**caractérisé en ce que** ladite deuxième surface (25) comporte une portion plane (25') apte à être en contact avec ladite deuxième branche transversale (102).

3. Dispositif selon l'une quelconque des revendications précédentes,
**caractérisé en ce qu'**il comporte un plan incliné (30) apte à guider ledit doigt de contact (23) vers ledit espacement (103) lors du verrouillage dudit dispositif.

4. Dispositif selon l'une quelconque des revendications précédentes,
**caractérisé en ce que** ledit bras de verrouillage (20) comporte une gorge (26) coopérant avec ledit manchon de fixation (5).

5. Dispositif selon l'une quelconque des revendications précédentes,
**caractérisé en ce que** ledit verrou (10) comporte une biellette de compression (40) reliant ledit manchon (5) audit pion de pivotement (13).

6. Dispositif selon l'une quelconque des revendications précédentes,
**caractérisé en ce que** le bras de verrouillage (20) comportant une cheville d'accrochage (27) entre une première extrémité (21) et une deuxième extrémité (22) de ce bras de verrouillage (20), ledit loquet de libération (14) coopère avec ladite cheville d'accrochage (27) dudit bras de verrouillage (20) pour empêcher un basculement de la poignée (11) lorsque ledit dispositif (4) est verrouillé.

7. Aéronef (1) muni d'un élément structural (2) à fixer à une structure adjacente (3) à l'aide d'au moins un dispositif de verrouillage (4), le dispositif de verrouillage (4) étant pourvu d'un verrou (10) agencé sur ledit élément structural (2) et d'une broche de retenue (100) agencée sur ladite structure adjacente (3), ledit verrou (10) comportant d'une part une poignée (11) munie d'un orifice oblong (12) dans lequel est inséré un manchon de fixation (5) à l'élément structural (2) et d'autre part un bras de verrouillage (20) dont une première extrémité (21) est articulée à ladite poignée (11) par un pion de pivotement (13), ladite poignée (11) comportant un loquet de libération (14) apte à empêcher un basculement de ladite poignée (11) par rapport audit bras de verrouillage (20),
**caractérisé en ce que** ledit dispositif de verrouillage (4) est selon l'une quelconque des revendications précédentes.

8. Procédé de déverrouillage d'un élément structural (2) fixé à une structure adjacente (3) par au moins un dispositif de verrouillage (4) selon l'une quelconque des revendications 1 à 6 pourvu d'un verrou (10) agencé sur ledit élément structural (2) et d'une broche de retenue (100) agencée sur ladite structure adjacente (3), ledit verrou (10) comportant d'une part une poignée (11) munie d'un orifice oblong (12) dans lequel est inséré un manchon de fixation (5) fixé audit élément structural (2) et d'autre part un bras de verrouillage (20) dont une première extrémité (21) est articulée à ladite poignée (11) par un pion de pivotement (13), ladite poignée (11) comportant un loquet de libération (14) apte à empêcher un basculement de ladite poignée (11) par rapport audit bras de verrouillage (20), ladite broche de retenue (100) comportant une première branche transversale (101) et une deuxième branche transversale (102) séparées par un espacement (103), une deuxième extrémité (22) dudit bras de verrouillage (20) comprenant un doigt de contact (23) muni de part et d'autre d'une première surface (24) en regard de ladite première extrémité (21) et d'une deuxième surface (25) opposée à ladite première surface (24), ladite première surface (24) étant un moyen de fermeture qui coopère avec ladite première branche transversale (101) pour verrouiller ledit dispositif de verrouillage (4), au cours duquel :
- on manoeuvre ledit loquet de libération (14) pour désolidariser ladite poignée (11) dudit bras de verrouillage (20),
- on manoeuvre ladite poignée (11) sur un premier secteur angulaire (θ1) pour plaquer ladite deuxième surface (25) contre ladite deuxième branche transversale (102),
- on manoeuvre ladite poignée (11) sur un deuxième secteur angulaire (θ2) pour que ladite deuxième surface (25) exerce un effort sur ladite deuxième branche transversale (102) afin d'écarter ledit élément structural (2) de ladite structure adjacente (3), et
- on manoeuvre ladite poignée (11) sur un troisième secteur angulaire (θ3) pour sortir ledit doigt de contact (23) dudit espacement (103).

## Claims

1. Locking device (4) for locking a structural element (2) to an adjacent structure (3), the locking device (4) being provided with a latch (10) suitable for being arranged on said structural element (2) and with a retaining pin (100) suitable for being arranged on said adjacent structure (3), said latch (10) having firstly a handle (11) provided with an oblong orifice (12) in which there is inserted a fastening sleeve (5) for fastening to said structural element (2), and secondly a locking arm (20) having a first end (21) hinged to said handle (11) via a pivot pin (13), said handle (11) having a release catch (14) suitable for preventing said handle (11) from tilting relative to said locking arm (20),
**characterised in that** said retaining pin (100) has a first transverse branch (101) and a second transverse branch (102) that are separated by a space (103), and a second end (22) of said locking arm (20) comprises a contact finger (23) provided on either side with a first surface (24) facing said first end (21) and with a second surface (25) opposite to said first surface (24), said first surface (24) being a closure means that co-operates with said first transverse branch (101) to lock said locking device (4), said second surface (25) being an extracting means for extracting said latch (10) that co-operates with said second transverse branch (102) to move the latch (10) longitudinally away from the retaining pin (100), said contact finger (23) being outside said space (103) so as to unlock said locking device (4).

2. Device according to Claim 1,
**characterised in that** said second surface (25) has a plane portion (25') suitable for being in contact with said second transverse branch (102).

3. Device according to either one of the preceding claims,
**characterised in that** it has an inclined plane (30) suitable for guiding said contact finger (23) towards said space (103) while said device is being locked.

4. Device according to any one of the preceding claims,
**characterised in that** said locking arm (20) has a groove (26) co-operating with said fastening sleeve (5).

5. Device according to any one of the preceding claims,
**characterised in that** said latch (10) has a compression link (40) connecting said sleeve (5) to said pivot pin (13).

6. Device according to any one of the preceding claims,
**characterised in that** the locking arm (20) has a catch pin (27) between a first end (21) and a second end (22) of said locking arm (20), and said release catch (14) co-operates with said catch pin (27) of said locking arm (20) to prevent the handle (11) from tilting when said device (4) is locked.

7. Aircraft (1) provided with a structural element (2) for fastening to an adjacent structure (3) using at least one locking device (4), the locking device (4) being provided with a latch (10) arranged on said structural element (2) and with a retaining pin (100) arranged on said adjacent structure (3), said latch (10) having firstly a handle (11) provided with an oblong orifice (12) in which there is inserted a fastening sleeve (5) for fastening to the structural element (2), and secondly a locking arm (20) having a first end (21) hinged to said handle (11) via a pivot pin (13), said handle (11) having a release catch (14) suitable for preventing said handle (11) from tilting relative to said locking arm (20),
**characterised in that** said locking device (4) is according to any one of the preceding claims.

8. Method for unlocking a structural element (2) fastened to an adjacent structure (3) by at least one locking device (4) according to any one of Claims 1 to 6, the locking device (4) being provided with a latch (10) arranged on said structural element (2) and with a retaining pin (100) arranged on said adjacent structure (3), said latch (10) having firstly a handle (11) provided with an oblong orifice (12) in which there is inserted a fastening sleeve (5) fastened to said structural element (2), and secondly a locking arm (20) having a first end (21) hinged to said handle (11) via a pivot pin (13), said handle (11) having a release catch (14) suitable for preventing said handle (11) from tilting relative to said locking arm (20), said retaining pin (100) having a first transverse branch (101) and a second transverse branch (102) that are separated by a space (103), a second end (22) of said locking arm (20) comprising a contact finger (23) provided on either side with a first surface (24) facing said first end (21) and with a second surface (25) opposite to said first surface (24), said first surface (24) being a closure means that co-operates with said first transverse branch (101) to lock said locking device (4), the method comprising the following steps:
- moving said release catch (14) to separate said handle (11) from said locking arm (20);
- moving said handle (11) through a first angular sector (θ1) to press said second surface (25) against said second transverse branch (102);
- moving said handle (11) through a second angular sector (θ2) so that said second surface (25) exerts a force on said second transverse branch (102) in order to move said structural element (2) away from said adjacent structure (3); and
- moving said handle (11) through a third angular sector (θ3) so as to extract said contact finger (23) from said space (103).

## Patentansprüche

1. Verriegelungsvorrichtung (4) eines Strukturelements (2) gegen eine benachbarte Struktur (3) mit einer Verriegelung (10), die auf dem Strukturelement (2) angebracht werden kann, und einem Rückhaltezapfen (100), der an der benachbarten Struktur (3) angebracht werden kann, wobei die Verriegelung (10) einerseits einen Griff (11) aufweist, der mit einem Längsloch (12) versehen ist, in das eine Muffe (5) zur Befestigung am Strukturelement (2) eingefügt ist, und andererseits einen Verriegelungsarm (20) aufweist, dessen erstes Ende (21) an dem Griff (11) über einen Schwenkbolzen (13) angelenkt ist, wobei der Griff (11) eine Öffnungsklinke (14) aufweist, die ein Verschwenken des Griffs (11) bezüglich des Verriegelungsarms (20) verhindern kann,
**dadurch gekennzeichnet, dass** der Rückhaltezapfen (100) einen ersten Querarm (101) und einen zweiten Querarm (202) aufweist, die mit einem Abstand (103) voneinander getrennt sind, wobei ein zweites Ende (22) des Verriegelungsarms (20) einen Kontaktfinger (23) aufweist, der auf beiden Seiten mit einer ersten Fläche (24) gegenüber dem ersten Ende (21) und einer zweiten Fläche (25) gegenüber der ersten Fläche (24) versehen ist, wobei die erste Fläche (24) ein Verriegelungsmittel darstellt, welches mit dem ersten Querarm (101) zusammenwirkt, um die Verriegelungsvorrichtung (4) zu verriegeln, und die zweite Fläche (25) ein Mittel zum Herausziehen der Verriegelung (10) darstellt, welches mit dem zweiten Querarm (102) zusammenwirkt, um in Längsrichtung die Verriegelung (10) von dem Rückhaltezapfen (100) zu entfernen, wobei der Kontaktfinger (23) sich außerhalb des Abstands (103) befindet, um die Verriegelungsvorrichtung (4) zu entriegeln.

2. Verriegelungsvorrichtung nach Anspruch 1,
**dadurch gekennzeichnet, dass** die zweite Fläche (25) einen ebenen Bereich (25') aufweist, der in Kontakt mit dem zweiten Querarm (102) treten kann.

3. Vernegelungsvorrichtung nach einem der vorstehenden Ansprüche,
**dadurch gekennzeichnet, dass** sie eine geneigte Ebene (30) aufweist, die den Kontaktfinger (23) während der Verriegelung der Vorrichtung auf den Abstand (103) zu führen kann.

4. Verriegelungsvorrichtung nach einem der vorstehenden Ansprüche, **dadurch gekennzeichnet, dass** der Vernegelungsarm (20) eine Nut (26) aufweist, die mit der Verriegelungsmuffe (5) zusammenwirkt.

5. Verriegelungsvorrichtung nach einem der vorstehenden Ansprüche,
**dadurch gekennzeichnet, dass** die Verriegelung (10) einen Druckstab (40) aufweist, der die Muffe (5) mit dem Schwenkbolzen verbindet.

6. Verriegelungsvorrichtung nach einem der vorstehenden Ansprüche,
**dadurch gekennzeichnet, dass** der Verriegelungsarm (20) zwischen einem ersten Ende (21) und einem zweiten Ende (22) einen Ankopplungsstift (27) aufweist, wobei die Öffnungsklinke (14) mit dem Ankopplungsstift (27) des Verriegelungsarms (20) zusammenwirkt, um ein Verschwenken des Griffs (11) zu verhindern, während die Verriegelungsvorrichtung (4) verriegelt ist.

7. Luftfahrzeug (1) mit einem Strukturelement (2), welches an einer benachbarten Struktur (3) mit Hilfe zumindest einer Verriegelungsvorrichtung zu befestigen ist, wobei die Verriegelungsvorrichtung (4) mit einer auf dem Strukturelement (2) angeordneten Verriegelung (10) und einem Rückhaltezapfen (100), der auf der benachbarten Struktur (3) angeordnet ist, versehen ist, wobei die Verriegelung (10) einerseits einen mit einem Langloch (12) versehenen Griff (11) aufweist, wobei in das Langloch eine Muffe (5) zur Befestigung an dem Strukturelement (2) eingefügt ist, und wobei die Verriegelung andererseits einen Verriegelungsarm (20) aufweist, dessen erstes Ende (21) über einen Schwenkbolzen (13) an dem Griff (11) angelenkt ist, wobei der Griff (11) eine Öffnungsklinke (14) aufweist, die ein Verschwenken des Griffs (11) gegenüber dem Verriegelungsarm (20) verhindern kann,
**dadurch gekennzeichnet, dass** die Verriegelungsvorrichtung (4) gemäß einem der vorstehenden Ansprüche ausgestaltet ist.

8. Verfahren zum Lösen eines Strukturelements (2), welches an einer benachbarten Struktur (3) befestigt ist, mit mindestens einer Verriegelungsvorrichtung (4) nach einem der Ansprüche 1 bis 6, welche mit einer Verriegelung (10) versehen ist, die auf dem Strukturelement (2) angeordnet ist, sowie mit einem Rückhaltezapfen (100), der auf der benachbarten Struktur (3) angeordnet ist, wobei die Verriegelung (10) einerseits einen Griff (11) mit einem Langloch (12), in das eine Befestigungsmuffe (5) eingefügt ist, die an dem Strukturelement (2) befestigt ist, und andererseits einen Verriegelungsarm (20) aufweist, dessen erstes Ende (21) an dem Griff (11) über einen Schwenkbolzen (13) angelenkt ist, wobei der Griff (11) eine Öffnungsklinke (14) aufweist, die ein Verschwenken des Griffs (11) bezüglich des Verriegelungsarms (20) verhindern kann, wobei der Rückhaltezapfen (100) einen ersten Querarm (101) und einen zweiten Querarm (102) aufweist, die mit einem Abstand (103) voneinander getrennt sind, wobei ein zweites Ende (22) des Verriegelungsarms (20) einen Kontaktfinger (23) aufweist, der auf beiden Seiten eine erste Fläche (24) gegenüber dem ersten Ende (21) und eine zweite Fläche (25) gegenüber der ersten Fläche (24) aufweist, wobei die erste Fläche (24) ein Verriegelungsmittel darstellt, welches mit dem ersten Querarm (101) zusammenwirkt, um die
Verriegelungsvorrichtung (4) zu verriegeln, wobei während des Verfahrens:
- die Öffnungsklinke (14) betätigt wird, um den Griff (11) von dem Verriegelungsarm (20) zu lösen,
- der Griff (11) in einen ersten Winkelbereich (θ1) bewegt wird, um die zweite Fläche (25) gegen den zweiten Querarm (102) zu drücken,
- der Griff (11) in einen zweiten Winkelbereich (θ2) bewegt wird, damit die zweite Fläche (25) eine Kraft auf den zweiten Querarm (102) ausübt, um das Strukturelement (2) von der benachbarten Struktur (3) zu beabstanden, und
- der Griff (11) in einen dritten Winkelbereich (θ3) bewegt wird, um den Kontaktfinger (23) aus dem Abstand (103) herauszulösen.
